# EUROPÄISCHE PATENTANMELDUNG

(11) **EP 0 936 095 A2**
(43) Veröffentlichungstag der Anmeldung: **18.08.1999**
(21) Anmeldenummer: 98124643.2
(22) Anmeldetag: 23.12.1998
(51) Int. Cl.: B60J 7/14

(54) **Hardtop-Fahrzeug**

(30) Priorität: 11.02.1998 DE 19805477
(71) Anmelder: DaimlerChrysler AG, 70567 Stuttgart (DE)
(72) Erfinder: Ellenrieder, Gunther, 73732 Esslingen (DE); Kristl, Rainer, 73249 Wernau (DE); Martens, Dieter, 71297 Mönsheim (DE)

(57) **Zusammenfassung**

Ein Hardtop-Fahrzeug weist ein Frontdachteil (4), ein Heckdachteil (5), das mit einer festen Heckscheibe versehen ist, und an der Karosserie des Fahrzeugs befestigte Hauptlenker (6) zum Verschwenken und Ablegen des Heckdachteils (5) in einem Kofferraum (3) des Fahrzeugs auf. An dem Heckdachteil (5) sind auf jeder Fahrzeugseite wenigstens zwei mit dem Frontdachteil (4) in Verbindung stehende Hebel (10,11) angebracht, durch welche das Frontdachteil (4) über das Heckdachteil (5) verschwenkbar ist und in dem Kofferraum (3) ablegbar ist.

## Beschreibung

Die Erfindung betrifft ein Hardtop-Fahrzeug mit einem Frontdachteil und einem Heckdachteil nach der im Oberbegriff von Anspruch 1 näher definierten Art.

Ein gattungsgemäßes Hardtop-Fahrzeug ist z.B. in der DE 44 45 944 C1 beschrieben. Weitere ähnliche Hardtop-Fahrzeuge gehen auch aus der DE 44 45 580 C1 sowie der DE 195 16 877 C1 hervor.

Bei diesen bekannten Hardtop-Fahrzeugen ist jedoch nacheilig, daß die abgelegten Dachteile in der Cabriolet-Position einen erheblichen Teil des Kofferraums beanspruchen. Dies ist der Fall, weil das vordere Dachteil und das hintere Dachteil des versenkbaren Hardtops muschelförmig im Kofferraum zu liegen kommen, wodurch zwischen den Dachteilen ein relativ großes, nicht nutzbares Volumen verbleibt.

Gemäß der DE 44 35 222 C1 wurde versucht, dieses bekannte Problem dadurch zu lösen, daß ein sich hinter dem hinteren Dachteil befindliches Heckteil, welches die C-Säulen beinhaltet, über das hintere Dachteil geschwenkt und anschließend gemeinsam mit dem hinteren Dachteil sowie weiteren Dachteilen, z.B. dem vorderen Dachteil, in den Kofferraum verschwenkt wird.

Bei dieser Verschwenk- bzw. Ablegebewegung wird das vordere Dachteil unter das hintere Dachteil abgelegt, wodurch sich für die während der Ablegebewegung im Fahrzeug sich befindlichen Personen eine starke Einschränkung ihrer Kopffreiheit ergibt. Zudem sind für das Verschwenken der Dachteile jeweils eigene Anlenkhebel und somit auch eine eigene Steuerung dieser Hebel notwendig.

Die EP 0 482 681 B1 beschreibt eine Möglichkeit der Ablage eines Cabriolet-Verdecks, bei welcher die beiden Dachteile ebenfalls nicht muschelförmig zueinander abgelegt werden.

Allerdings sind auch dort sehr viele einzelne, mit der Karosserie verbundene Hebel und Lenker und somit auch entsprechende Steuereinrichtungen notwendig.

Der vorliegenden Erfindung liegt daher die Aufgabe zugrunde, ein Hardtop-Fahrzeug zu schaffen, bei welchem die Dachteile so im Kofferraum zu liegen kommen, daß dadurch möglichst wenig Raum, insbesondere zwischen den Dachteilen, beansprucht wird, wobei die Kopffreiheit der sich in dem Fahrzeug befindlichen Personen während der Ablegebewegung möglichst wenig eingeschränkt werden soll, und wobei eine möglichst einfache Steuerung der Ablegefunktion der Dachteile gegeben sein soll.

Erfindungsgemäß wird diese Aufgabe durch die im kennzeichnenden Teil von Anspruch 1 genannten Merkmale gelöst.

Durch die erfindungsgemäßen Hebel, die das Frontdachteil mit dem Heckdachteil verbinden, entsteht zusätzlich zu dem das Heckdachteil in den Kofferraum verschwenkenden Viergelenk ein weiteres an dem Heckdachteil angebrachtes Viergelenk, durch welches das Frontdachteil über dem Heckdachteil und gemeinsam mit demselben in den Kofferraum verschwenkbar ist.

Somit kommt das Frontdachteil im Kofferraum über dem Heckdachteil zu liegen, wobei jedoch beide mit ihrer konvexen Seite nach oben abgelegt werden und somit konvex-konkav aufeinander zu liegen kommen.

Dadurch, daß das Frontdachteil erfindungsgemäß über das Heckdachteil geführt wird, ergibt sich beim Ablegen des Hardtops insbesondere auf den Rücksitzen sehr viel mehr Kopffreiheit für die Fahrzeuginsassen.

In einer besonders vorteilhaften Ausführungsform der Erfindung kann vorgesehen sein, daß einer der an dem Heckdachteil angebrachten Hebel über einen Zwischenhebel mit einem der Hauptlenker verbunden ist.

Dadurch kann der Einsatz zusätzlicher Steuereinrichtungen vermieden werden, da die Ablegebewegung des Frontdachteils durch den Zwischenhebel zwangsgesteuert wird und das Frontdachteil somit beim Verschwenken des Heckdachteils durch die Hauptlenker automatisch abgelegt wird.

Vorteilhafte Ausgestaltungen und Weiterbildungen der Erfindung ergeben sich aus den weiteren Unteransprüchen und aus dem nachfolgend anhand der Zeichnung prinzipmäßig beschriebenen Ausführungsbeispiel.

Es zeigt:
- Fig. 1: ein erfindungsgemäßes Hardtop-Fahrzeug mit geschlossenem Verdeck;
- Fig. 2: das Hardtop-Fahrzeug aus Fig. 1 in einem Anfangsstadium der Ablegebewegung;
- Fig. 3: das Hardtop-Fahrzeug aus Fig. 1 in einem Endstadium der Ablegebewegung;
- Fig. 4: das Hardtop-Fahrzeug aus Fig. 1 mit geöffnetem und abgelegtem Verdeck;
- Fig. 5: das Frontdachteil und das Heckdachteil des Hardtop-Fahrzeugs in der Position gemäß Fig. 1;
- Fig. 6: das Frontdachteil und das Heckdachteil des Hardtop-Fahrzeugs in der Position gemäß Fig. 2;
- Fig. 7: das Frontdachteil und das Heckdachteil des Hardtop-Fahrzeugs in der Position gemäß Fig. 3;
- Fig. 8: das Frontdachteil und das Heckdachteil des Hardtop-Fahrzeugs in der Position gemäß Fig. 4;
- Fig. 9: die Hebel zur Verschwenkung der Dachteile in einer Position gemäß Fig. 1 und Fig. 5;
- Fig. 10: die Hebel zur Verschwenkung der Dachteile in einer Position gemäß Fig. 2 und Fig. 6;
- Fig. 11: die Hebel zur Verschwenkung der Dachteile in einer Position gemäß Fig. 3 und Fig. 7; und
- Fig. 12: die Hebel zur Verschwenkung der Dachteile in einer Position gemäß Fig. 4 und Fig. 8.

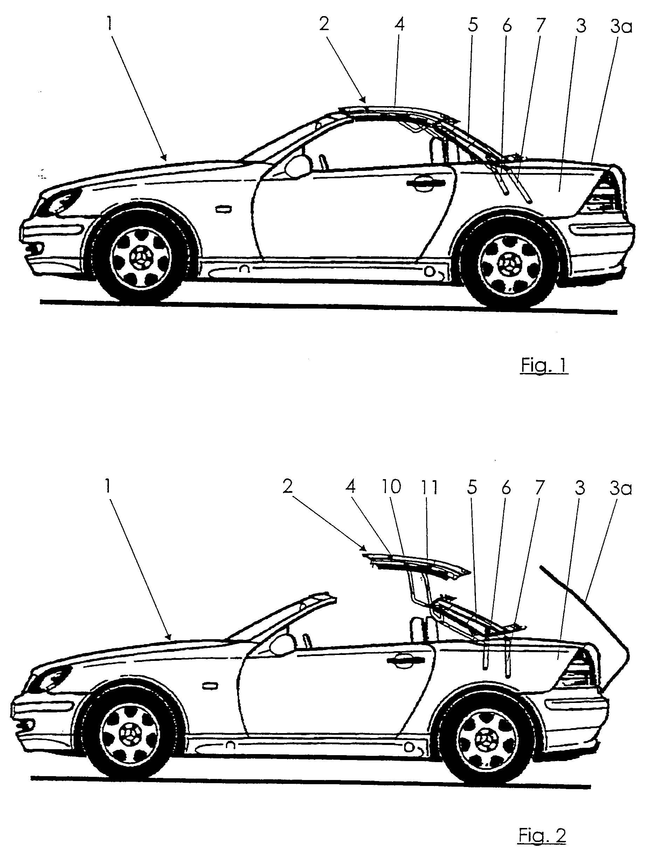

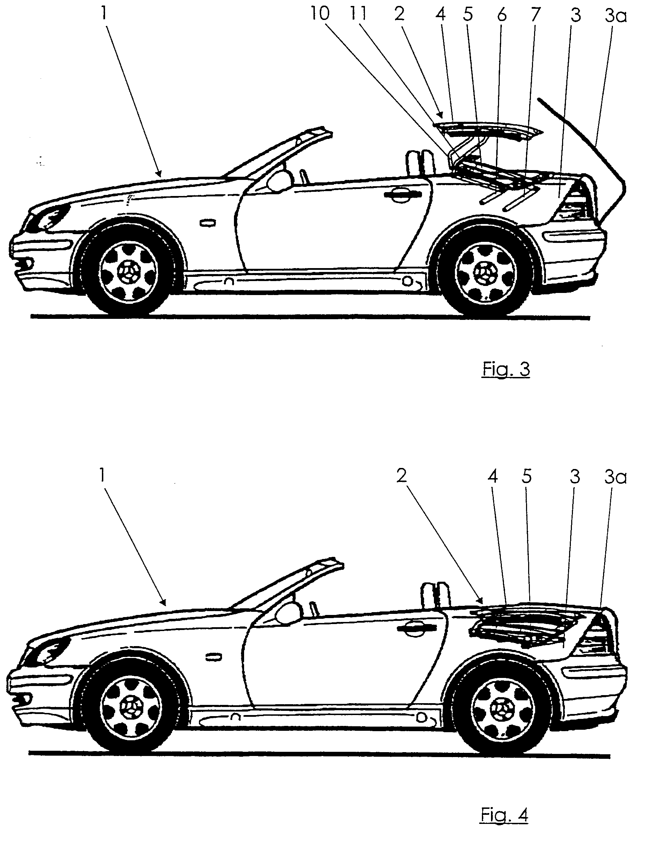

Die Figuren 1 bis 4 zeigen ein Fahrzeug 1, welches mit einem Hardtop 2 versehen ist. Die anderen Bauteile des Fahrzeugs 1 werden im folgenden nicht näher beschrieben, da sie für die Funktion des Hardtops 2 nicht von entscheidender Bedeutung sind. Des weiteren weist das Fahrzeug 1 einen Kofferraum 3 mit einem Kofferraumdeckel 3a auf, der gemäß Fig. 2 und Fig. 3 während der Versenkbewegung des Hardtops 2 in an sich bekannter Weise geöffnet wird.

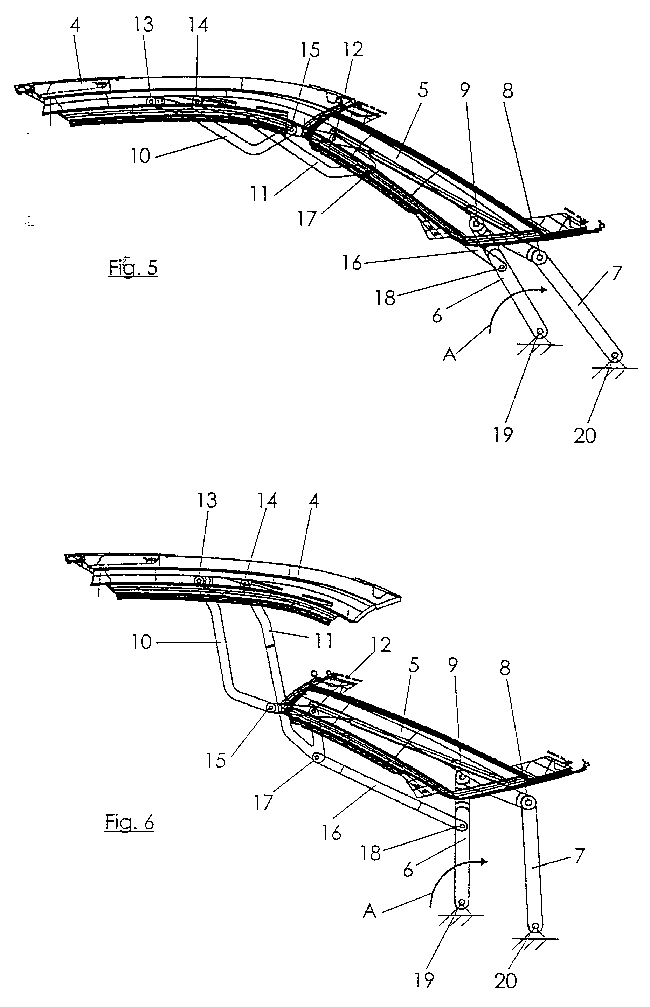

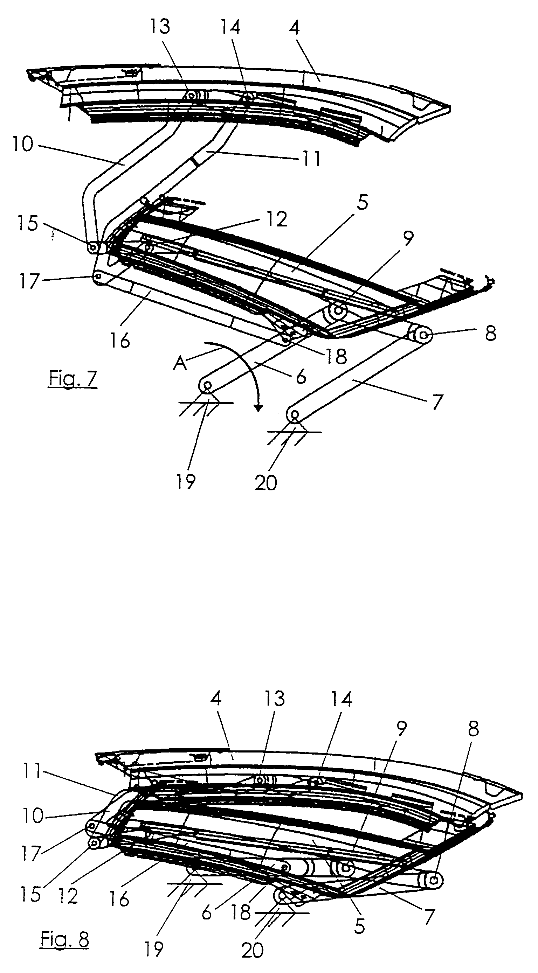

Die Figuren 5 bis 8 zeigen das Hardtop 2 in den verschiedenen Positionen während des Verschwenkens analog der Figuren 1 bis 4. In Fig. 5 ist das Hardtop 2 dabei in seiner geschlossenen Stellung, der sogenannten Coupe-Position, dargestellt. Das Hardtop 2 weist dabei ein Frontdachteil 4 sowie ein Heckdachteil 5 auf. Das Heckdachteil 5 ist auf jeder Fahrzeugseite mit der Karosserie des Fahrzeugs 1 über einen vorderen Hauptlenker 6 und einen hinteren Hauptlenker 7 verbunden.

Der vordere Hauptlenker 6 ist mit dem Heckdachteil 5 an einem Befestigungspunkt 9 und mit der Karosserie des Fahrzeugs 1 an einem Befestigungspunkt 19 jeweils gelenkig verbunden. Der hintere Hauptlenker 7 ist mit dem Heckdachteil 5 an einem Befestigungspunkt 8 und mit der Karosserie des Fahrzeugs 1 an einem Befestigungspunkt 20 jeweils gelenkig verbunden. Durch diese Anordnung ergibt sich ein Viergelenk, das eine annähernde Translationsbewegung des Heckdachteiles 5 relativ zur Karosserie des Fahrzeugs 1 erlaubt.

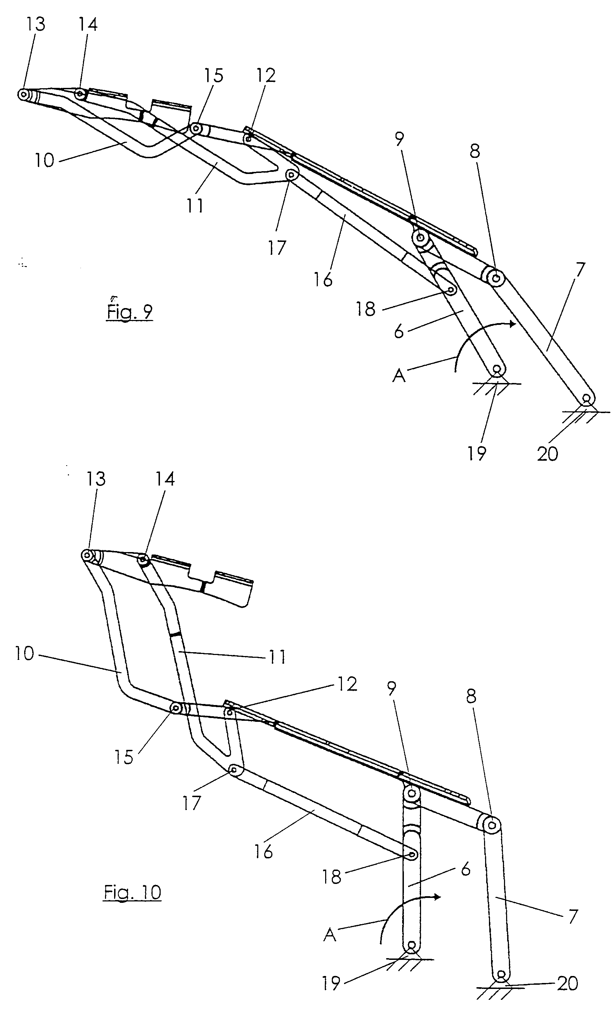

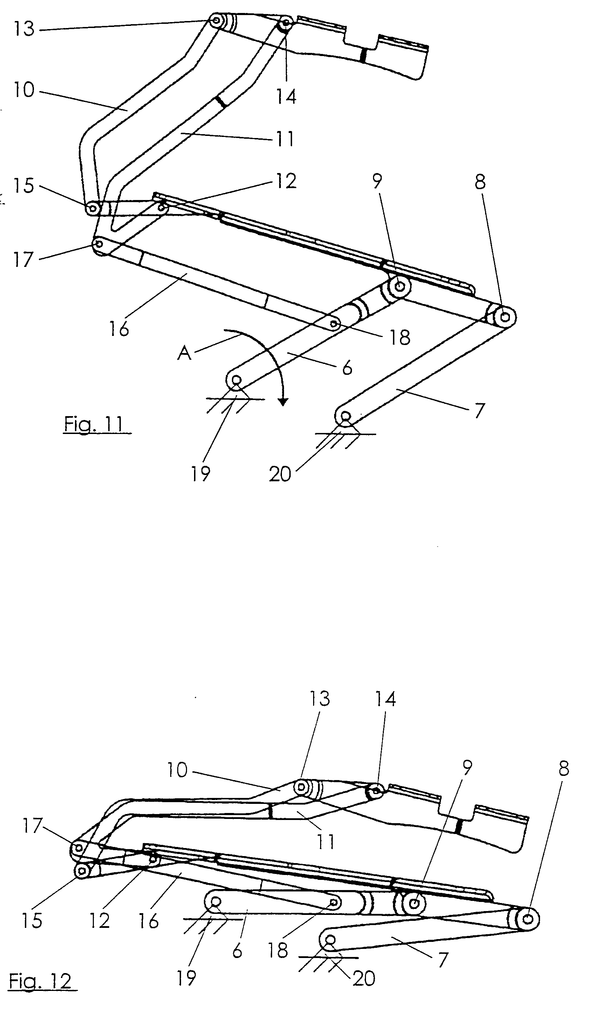

In den Figuren 9 bis 12 ist das Hardtop 2 zur besseren Übersichtlichkeit ohne die Dachteile 4 und 5 dargestellt.

An der dem Frontdachteil 4 zugewandten Seite ist das Heckdachteil 5 mit einem vorderen Hebel 10 und einem hinteren Hebel 11 versehen. Der vordere Hebel 10 ist mit dem Heckdachteil 5 an einem Befestigungspunkt 15 und mit dem Frontdachteil 4 an einem Befestigungspunkt 13 jeweils gelenkig verbunden. Der hintere Hebel 11 ist mit dem Heckdachteil 5 an einem Befestigungspunkt 12 und mit dem Frontdachteil 4 an einem Befestigungspunkt 14 jeweils gelenkig verbunden Durch diese Anordnung ergibt sich ein Viergelenk, das eine annähernde Translationsbewegung des Frontdachteiles 4 relativ zum Heckdachteil 5 erlaubt.

Der vordere Hebel 10 ist mit einer Knickachse 15 versehen, wohingegen der hintere Hebel 11 hakenförmig ausgebildet ist. Am untersten Ende des Hakens, der bei geschlossenem Hardtop 2, in Richtung des Fahrzeugs 1 betrachtet, den am weitesten hinten sich befindlichen Punkt des Hebels 11 bildet, ist ein gerade ausgebildeter Zwischenhebel 16 an einem Gelenkpunkt 17 angelenkt. An seinem anderen Ende ist der Zwischenhebel 16 mit dem vorderen Hauptlenker 6 an einem Gelenkpunkt 18 angelenkt.

Durch Verdrehen der Hauptlenker 6, 7 in Richtung des Pfeiles A wird das Heckdachteil 5 in an sich bekannter Weise nach hinten verschwenkt, wie dies in Fig. 6 dargestellt ist. Durch das Viergelenk, das durch den vorderen Hauptlenker 6 an den Befestigungspunkten 9 und 19 und den hinteren Hauptlenker 7 an den Befestigungspunkten 8 und 20 gebildet wird, ist hierzu nur eine Antriebseinrichtung (nicht dargestellt) erforderlich. Während der Ablegebewegung des Hardtops 2 öffnet sich, wie in Fig. 2 dargestellt, der Kofferraumdeckel 3a.

Durch die Verbindung des Frontdachteils 4 über die Hebel 10 und 11 mit dem Heckdachteil 5 wird auch das Frontdachteil 4 nach hinten in Richtung des Kofferraumes 3 bewegt. Dabei wird durch den Zwischenhebel 16 der Hebel 11 derart um den Befestigungspunkt 12 an dem Heckdachteil 5 gedreht, daß das Frontdachteil 4 in Richtung des Heckdachteils 5 über dasselbe geschwenkt wird und am Ende der Ablegebewegung mit seiner konkaven Innenseite auf der konvexen Außenseite des Heckdachteils 5 zu liegen kommt. Durch den Einsatz des Zwischenhebels 16 wird somit eine Zwangssteuerung des Frontdachteils 4 erreicht und es sind keine zusätzlichen Antriebseinrichtungen notwendig.

Am Ende der Ablegebewegung, also im geöffneten Zustand des Hardtops 2, der in den Figuren 4, 8 und 12 dargestellt ist, befindet sich das Hardtop 2 somit im Kofferraum 3 und die sogenannte Cabriolet-Position des Fahrzeuges 1 ist erreicht. Dabei liegen dann das Frontdachteil 4 und das Heckdachteil 5 jeweils mit ihrer konvexen Seite nach oben und es wird kein Platz zwischen dem Frontdachteil 4 und dem Heckdachteil 5 verschwendet.

Durch den Zwischenhebel 16 wird also eine Koppelung der Hebel 10 und 11 mit den Hauptlenkern 6 und 7 erreicht. Es ergibt sich dadurch an dem Heckdachteil 5 ein weiteres Viergelenk und somit eine Bewegung des Frontdachteils 4 und des Heckdachteils 5, die annähernd einer Translationsbewegung entspricht. Die Bewegungen der beiden Dachteile 4 und 5 verläuft dabei annähernd parallel zueinander.

## Patentansprüche

1. Hardtop-Fahrzeug mit einem Frontdachteil, mit einem Heckdachteil, das mit einer festen Heckscheibe versehen ist, und mit an der Karosserie des Fahrzeugs befestigten Hauptlenkern zum Verschwenken und Ablegen des Heckdachteils in einem Kofferraum des Fahrzeugs,
**dadurch gekennzeichnet,** daß
an dem Heckdachteil (5) auf jeder Fahrzeugseite wenigstens zwei mit dem Frontdachteil (4) in Verbindung stehende Hebel (10,11) angebracht sind, durch welche das Frontdachteil (4) über das Heckdachteil (5) verschwenkbar ist und in dem Kofferraum (3) ablegbar ist.

2. Hardtop-Fahrzeug nach Anspruch 1,
**dadurch gekennzeichnet,** daß
einer der an dem Heckdachteil (5) angebrachten Hebel (10,11) über einen Zwischenhebel (16) mit einem der Hauptlenker (6,7) verbunden ist.

3. Hardtop-Fahrzeug nach Anspruch 2,
**dadurch gekennzeichnet,** daß
die wenigstens zwei Hebel (10,11) in Fahrzeug-längsrichtung hintereinander liegen, wobei der hintere Hebel (11) hakenförmig ausgebildet ist, und wobei an dem Haken des Hebels (11) der Zwischenhebel (16) an einem Gelenkpunkt (17) angelenkt ist.

4. Hardtop-Fahrzeug nach Anspruch 1, 2 oder 3,
**dadurch gekennzeichnet,** daß
die mit dem Frontdachteil (4) in Verbindung stehenden Hebel (10,11) im vorderen Bereich des Heckdachteils (5) angebracht sind.
